# FASCICULE DE BREVET EUROPEEN

(11) **EP 1 199 247 B1**
(45) Date de publication et mention de la délivrance du brevet: **14.06.2006**
(21) Numéro de dépôt: 01402665.2
(22) Date de dépôt: 16.10.2001
(51) Int. Cl.: B62D 55/30

(54) **Dispositif d'entraînement à chenille souple avec roue de tension**
Antriebseinrichtung für ein Bandraupenfahrzeug mit einem Spannrad
Drive mechanism for an endless-tracked vehicle with a tensioning wheel

(30) Priorité: 20.10.2000 FR 0013459
(43) Date de publication de la demande: 24.04.2002
(73) Titulaire: OTICO, 77650 Longueville (FR)
(72) Inventeur: Piou, Denis, 89340 Villeblevin (FR); Phely, Olivier, 77520 Thenisy (FR)
(74) Mandataire: Bezault, Jean

(56) Documents cités:
- DE-A- 2 538 488

## Description

L'invention concerne un dispositif d'entraînement à chenille, destiné à la propulsion de véhicules tout terrain, en particulier d'engins agricoles, viticoles et ostréicoles ou d'engins de travaux publics et forestiers.

Elle concerne plus particulièrement un dispositif d'entraînement à chenille, du type, comprenant une poutre sensiblement horizontale supportant deux roues d'extrémité et des roues de support, ainsi qu'une chenille souple sans fin s'enroulant autour des roues précitées et dans lequel l'une des roues d'extrémité est portée par un porte-roue monté mobile par rapport à la poutre pour constituer une roue de tension de la chenille.

Dans ses brevets français N° 2711959 et 2768387, la Demanderesse a proposé des dispositifs d'entraînement de ce type, dans lesquels la chenille est formée d'une bande souple sans fin munie intérieurement d'au moins une rangée de plots situés dans le sens de la longueur de la bande, distants entre eux d'un pas constant et ayant chacun sensiblement la forme d'une pyramide.

Cette bande sans fin s'enroule autour de deux roues d'extrémité, à savoir une roue motrice qui est généralement située à l'arrière du véhicule, et une roue non motrice qui est généralement située à l'avant du véhicule et qui constitue la roue de tension de la chenille.

La roue motrice est habituellement formée de deux jantes réunies entre elles, à intervalles réguliers, par des taquets d'entraînement qui viennent se loger entre les plots de la chenille pour assurer son entraînement.

Habituellement, la roue motrice est couplée à un arbre d'entraînement porté par le bâti du véhicule. En revanche, la poutre est montée oscillante par rapport au bâti du véhicule pour permettre à la chenille d'épouser la surface du terrain sur laquelle se déplace le véhicule.

Cette poutre supporte la roue de tension ainsi que des roues de support, montées folles, autour desquelles passe la bande souple sans fin.

Dans les dispositifs d'entraînement connus, la roue de tension est supportée par un porte-roue comprenant un organe de liaison apte à coulisser, selon le sens longitudinal du véhicule, dans un organe formant coulisse qui est solidaire de la poutre. Le porte-roue possède une fourche formant support de la roue de tension et comportant deux branches entourant cette dernière.

Dans les dispositifs connus, l'organe de liaison du porte-roue comprend un tiroir ayant trois points de guidage.

Par ailleurs, un mécanisme tendeur et amortisseur est prévu pour tendre la chenille et amortir la tension en cas de choc sur la chenille, ou dans le cas où un corps étranger vient se loger entre la chenille et l'une des roues du dispositif.

Bien que ces porte-roues coulissants donnent généralement satisfaction, ils nécessitent des moyens de guidage particulièrement complexes et coûteux à réaliser.

D'autre part, la réalisation du porte-roue sous la forme d'une fourche limite la largeur intérieure de la roue de tension, laquelle est habituellement réalisée sous la forme d'une roue monobloc à deux jantes, entre lesquelles passent les plots.

Or, pour certaines applications, et notamment pour des véhicules ayant une force motrice élevée, il apparaît souhaitable d'augmenter la largeur des plots, dans le sens transversal de la bande, et par conséquent la largeur de la roue de tension au niveau des logements des plots d'entraînement.

La Demanderesse s'est posé le problème d'améliorer les dispositifs d'entraînement à chenille souple du type précité, notamment en ce qui concerne la structure du porte-roue et aussi celui de la poutre. Cette poutre était jusqu'à présent réalisée sous la forme d'un profilé en U venant coiffer les roues de support.

L'invention apporte une solution aux problèmes mentionnés ci-dessus.

Elle propose à cet effet un dispositif du type défini en introduction, dans lequel le porte-roue est relié à la poutre par deux bielles qui sont articulées chacune à la poutre par une première articulation et au porte-roue par une seconde articulation en formant une liaison à quadrilatère déformable.

Ainsi, le porte-roue n'est plus monté coulissant sur la poutre, mais relié à cette dernière par un mécanisme articulé du type à quadrilatère déformable, en particulier un parallélogramme déformable, qui est beaucoup plus simple à réaliser et qui en outre procure un meilleur guidage.

Dans une forme de réalisation préférée de l'invention, la poutre comprend deux éléments plats rapprochés entre lesquels sont articulées les deux bielles, le porte-roue comprend deux éléments plats rapprochés entre lesquels sont articulées les deux bielles, chacune des roues de support comprend deux jantes coaxiales disposées de part et d'autre de la poutre, et la roue de tension comprend deux jantes coaxiales disposées de part et d'autre du porte-roue.

Ainsi, les deux bielles sont, au niveau de leurs articulations, maintenues à chaque fois entre les deux éléments plats rapprochés de la poutre et entre les deux éléments plats rapprochés du porte-roue.

Ces éléments plats, que l'on peut encore appeler fers plats, assurent à chaque fois un parfait guidage des bielles.

Dans une autre forme de réalisation de l'invention, la poutre comprend deux éléments plats rapprochés entre lesquels sont articulées les deux bielles, le porte-roue comprend deux éléments plats éloignés entre lesquels sont articulées les deux bielles, chacune des roues de support comprend deux jantes coaxiales disposées de part et d'autre de la poutre, et la roue de tension comprend deux jantes coaxiales disposées entre les éléments plats du porte-roue.

Dans une troisième forme de réalisation de l'invention, la poutre comprend deux éléments plats éloignés entre lesquels sont articulées les deux bielles, le porte-roue comprend deux éléments plats rapprochés autour desquels sont articulées les deux bielles, chacune des roues de support comprend deux jantes coaxiales disposées entre les éléments plats de la poutre, et la roue de tension comprend deux jantes coaxiales disposées de part et d'autre du porte-roue.

Dans une quatrième forme de réalisation de l'invention, la poutre comprend deux éléments plats éloignés entre lesquels sont articulées les deux bielles, le porte-roue comprend deux éléments plats éloignés entre lesquels sont articulées les deux bielles, chacune des roues de support comprend deux jantes coaxiales disposées entre les éléments plats de la poutre, et la roue de tension comprend deux jantes coaxiales disposées entre les éléments plats du porte-roue.

On comprendra que, dans les formes de réalisation précitées, lorsque les éléments plats (de la poutre ou du porte-roue) sont rapprochés, les roues sont à chaque fois avantageusement constituées de deux jantes disposées de part et d'autre de ces éléments plats.

En revanche, lorsque les éléments plats sont éloignés, ils favorisent l'implantation de chacune des roues dans l'espace libre ménagé entre ces éléments plats.

Dans une forme de réalisation préférée de l'invention, les deux éléments plats de la poutre et/ou les deux éléments plats du porte-roue sont réunis par des entretoises.

En variante, les deux éléments plats de la poutre et/ou du porte-roue sont formés par les ailes d'un profilé en U.

De manière avantageuse, les premières articulations sont disposées en dessous des secondes articulations, en sorte que le porte-roue se déplace au moins en partie au dessus de la poutre.

Selon une autre caractéristique de l'invention, le dispositif comprend un mécanisme tendeur et amortisseur interposé entre la poutre et le porte-roue.

Celui-ci comprend avantageusement un cylindre fermé par un fond et fixé sur la poutre, un ressort logé dans le cylindre et prenant appui sur son fond et un vérin interposé entre le ressort et le porte-roue.

Etant donné que le mouvement du porte-roue n'est pas strictement un mouvement coulissant, il est nécessaire de prévoir un appui mobile entre le ressort et le fond du cylindre précité.

Dans la description qui suit, faite seulement à titre d'exemple, on se réfère aux dessins annexés, sur lesquels :
- la figure 1 est une vue de côté d'un dispositif d'entraînement à chenille selon une première forme de réalisation de l'invention, le porte-roue étant dans une position déployée ;
- les figures 2, 3, 4 et 5 sont des vues en coupe, à échelle agrandie, prises respectivement selon les lignes II-II, III-III, IV-IV, et V-V de la figure 1 ;
- la figure 6 est une vue analogue à la figure 1, dans laquelle le porte-roue est dans une position rétractée ;
- la figure 7 est une vue de côté d'un dispositif selon une variante de réalisation ;
- la figure 8 est une vue partielle de côté d'un dispositif selon une seconde forme de réalisation de l'invention ;
- la figure 9 est une vue complète de dessus, avec arrachement, du dispositif de la figure 8 ;
- la figure 10 est une vue en coupe, à échelle agrandie, selon la ligne X-X de la figure 8 ;
- la figure 11 est une vue de côté d'un dispositif selon une troisième forme de réalisation de l'invention ;
- les figures 12 et 13 sont des vues en coupe, à échelle agrandie, selon respectivement les lignes XII-XII et XIII-XIII de la figure 11 ;
- la figure 14 est une vue partielle de côté d'un dispositif selon une quatrième forme de réalisation de l'invention ;
- la figure 15 est une vue complète de dessus, avec arrachement, du dispositif de la figure 14 ; et
- la figure 16 est une vue en coupe selon la ligne XVI-XVI de la figure 14.

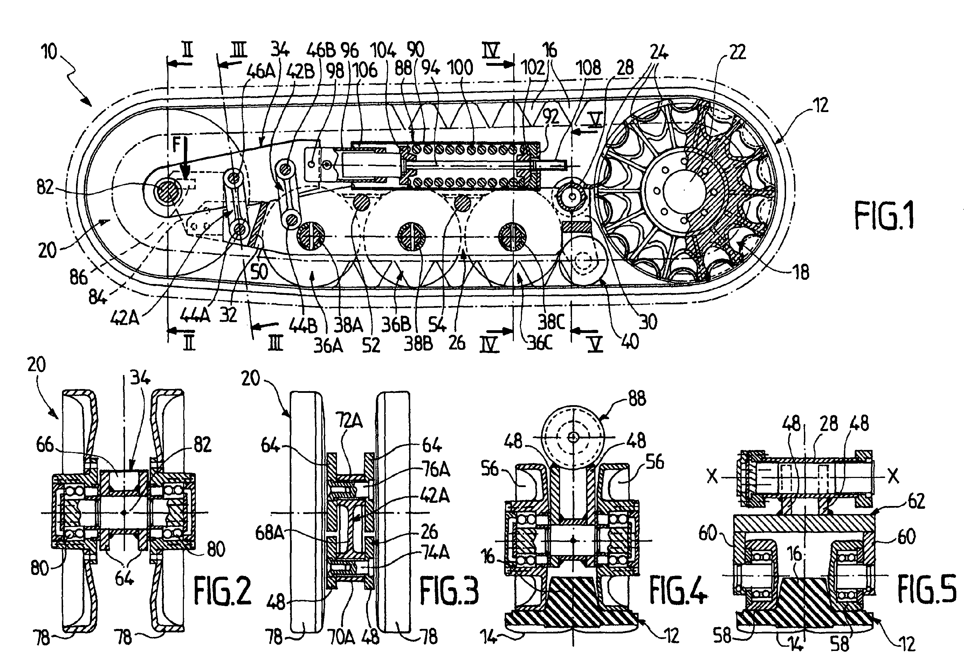

On se réfère à la figure 1 qui montre un dispositif d'entraînement 10 à chenille souple pour un véhicule tout terrain tel que par exemple un engin agricole, viticole ou ostréicole, ou encore un engin de travaux publics ou forestiers.

Le dispositif 10 est prévu pour être placé sur un côté du bâti (non représenté) du véhicule, un dispositif analogue symétrique étant placé de l'autre côté dudit bâti.

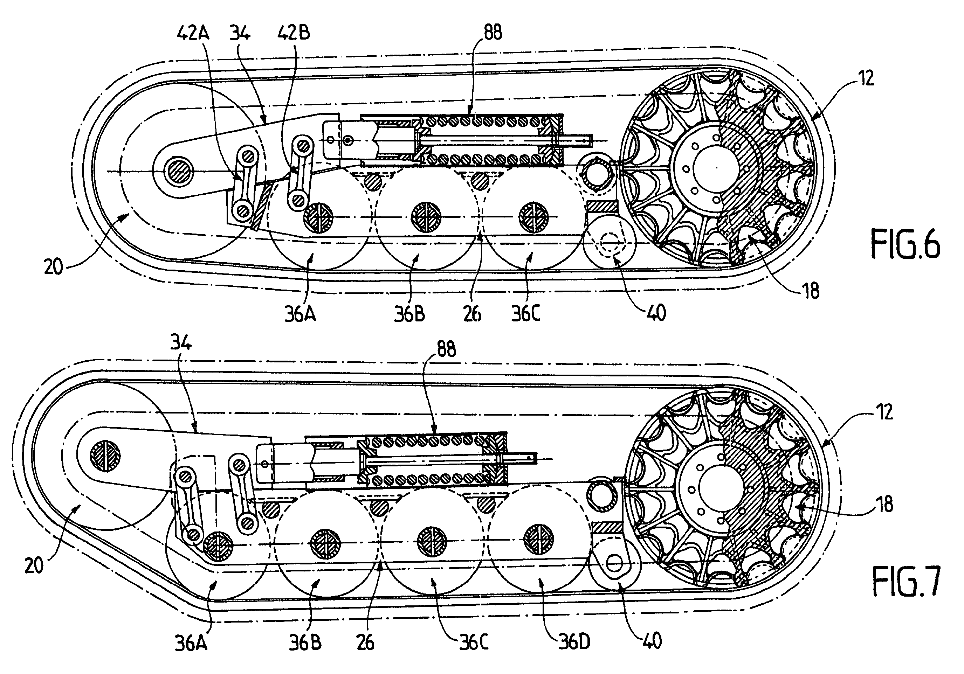

Le dispositif 10 est prévu pour entraîner une chenille 12 constituée d'une bande souple sans fin réalisée avantageusement en un matériau élastomère renforcé par des armatures intérieures. Cette bande sans fin comporte extérieurement une surface de roulement munie de crampons 14 (figures 4 et 5). La bande souple est munie intérieurement d'une rangée de plots (figures 1, 4 et 5) situés dans le sens de la longueur de la bande et distants entre eux d'un pas constant. Ces plots ont sensiblement la forme d'une pyramide comme décrit dans le brevet FR-A-2711959 (93 13211) au nom de la Demanderesse.

La bande souple s'enroule autour de deux roues d'extrémité : une roue motrice 18 à l'arrière du véhicule et une roue non motrice 20 (encore appelée roue de tension) située à l'avant du véhicule.

La roue motrice 18 est calée sur un arbre 22 porté par le bâti (non représenté) du véhicule. La roue 18 est constituée de deux jantes espacées réunies entre elles, à leur périphérie et à intervalles réguliers, par des taquets 24 destinés à venir s'engrener avec l'intérieur de la bande souple sans fin, en venant à chaque fois se loger dans un intervalle défini entre deux plots 16 successifs.

Le dispositif 10 comprend en outre une poutre 26 qui s'étend sensiblement à l'horizontale et qui comporte, à son extrémité postérieure, un pivot 28 pour assurer un mouvement oscillant de la poutre autour d'un axe X-X du bâti du véhicule. Cet axe s'étend horizontalement et parallèlement à l'axe de l'arbre 22, pour procurer un montage oscillant de la poutre. Le pivot 28 est solidaire de l'extrémité arrière 30 de la poutre. Cette dernière comprend une extrémité avant 32 à laquelle est relié un porte-roue 34, monté mobile par rapport à la poutre 26. Ce porte-roue supporte la roue non motrice 20 qui est montée à rotation libre.

Par ailleurs, la poutre 26 porte trois roues de support 36A, 36B et 36C montées à libre rotation autour d'axes respectifs 38A, 38B et 38C. Dans l'exemple de réalisation représenté, les roues 18 et 20 ont sensiblement le même diamètre, tandis que les roues 36A, 36B et 36C sont de diamètre plus faible.

La poutre 26 supporte en outre une petite roue 40, de plus faible diamètre, placée entre la roue 36C et la roue motrice 18.

Le porte-roue 34 est relié à la poutre 26 par deux bielles 42A et 42B généralement identiques qui sont articulées à la poutre par une première articulation 44a, respectivement 44b et au porte-roue par une seconde articulation 46a, respectivement 46b.

Ces quatre articulations ont des axes parallèles et sont situées au sommet d'un quadrilatère déformable, ici un parallélogramme déformable.

Les premières articulations 44A et 44B sont disposées en dessous des secondes articulations 46A et 46B, en sorte que le porte-roue se déplace au moins en partie au-dessus de l'extrémité 32 de la poutre. Cette dernière possède une forme effilée et le porte-roue s'étend dans une position légèrement inclinée par rapport à l'horizontale.

De ce fait, le porte-roue 34 est susceptible de se déplacer par rapport à la poutre avec un mouvement combiné de rotation et de translation.

La poutre 26 comprend deux éléments plats 48 (encore appelés fers plats) qui sont rapprochés l'un de l'autre dans une disposition parallèle (figures 3, 4 et 5). Ces éléments 48 sont maintenus entre eux par des entretoises, notamment 50, 52 et 54.

Chacune des roues de support, et en particulier la roue 36C (figure 4) est formée de deux jantes 56 coaxiales disposées de part et d'autre de la poutre 26, c'est-à-dire de part et d'autre des éléments plats 48.

La petite roue 40 (figure 5) comprend également deux jantes indépendantes 58 portées respectivement par les ailes 60 d'une chape 62 soudée à l'extrémité arrière 30 de la poutre.

Le porte-roue 34 comprend deux éléments plats rapprochés 64 (figures 2 et 3), encore appelés fers plats, réunis entre eux par des entretoises, en particulier une entretoise 66 (figure 2). Ces éléments plats 64 sont parallèles entre eux et agencés de telle sorte que la largeur du porte-roue 34 corresponde sensiblement à la largeur de la poutre, comme on le voit mieux sur la figure 3.

Les premières articulations 44A et 44B des bielles viennent se loger dans l'espace défini entre les éléments plats 48 de la poutre, tandis que leurs secondes articulations 46A et 46B viennent se loger dans l'espace libre ménagé entre les éléments plats 64 du porte-roue, procurant ainsi un excellent guidage. Comme on peut le voir sur la figure 3, chacune des bielles, ici la bielle 42A, comporte une âme 68A reliée entre deux cylindres 70A et 72A qui viennent se loger respectivement entre les éléments plats 48 de la poutre et les éléments plats 64 du porte-roue. Ces deux cylindres 70A et 72A sont traversés respectivement par des axes d'articulation 74A et 76A.

La roue motrice 20 (figure 2) comprend ici deux jantes indépendantes 78 situées respectivement de part et d'autre des éléments plats 64 du porte-roue et montées à rotation libre, grâce à des roulements 80 sur les extrémités respectives d'un arbre 82 qui traverse de part en part le porte-roue.

Sur l'extrémité avant 32 de la poutre est fixée une bride 84 dans laquelle est aménagée une fenêtre 86 dans laquelle vient se loger l'extrémité d'une lame ressort (non représentée) apte à exercer une force dans la direction de la flèche F (figure 1) pour assurer la suspension de la poutre. Ainsi, la poutre peut osciller autour de son axe, en étant rappelée par la force F.

Le dispositif 10 comprend en outre un mécanisme tendeur et amortisseur 88 (figure 1) interposé entre la poutre et le porte-roue pour assurer la mise sous tension de la chenille. Ce mécanisme comprend un cylindre 90 fixé longitudinalement au-dessus de la poutre et présentant un fond 92. Ce dernier est traversé par une tige 94 fixée à un vérin 96, lequel est articulé par un axe 98 sur le porte-roue. Un ressort hélicoïdal 100 entoure la tige 14 et prend appui sur une coupelle 102 qui prend appui sur l'intérieur du fond 92 et une autre coupelle 104 reliée au vérin 96. La forme de la coupelle 102 autorise un coulissement et un débattement de la tige 94. Un joint annulaire 106 entoure le vérin 96 et assure l'étanchéité avec le cylindre 90, du côté de son extrémité ouverte.

Le ressort 90 est destiné à être préchargé, la valeur de tarage étant fournie visuellement par la longueur de l'extrémité 108 de la tige, qui dépasse le fond 92 du cylindre. On peut de cette manière contrôler la charge agissant sur le porte-roue 34.

Le porte-roue 34, en combinaison avec le mécanisme tendeur et amortisseur 88, permet d'assurer la tension de la chenille et d'absorber les irrégularités de terrain, ainsi que les conséquences éventuelles d'un objet venant se coincer entre la chenille et l'une des roues du dispositif.

Sur la figure 1, le porte-roue 34 est représenté en position déployée, tandis que sur la figure 6, il est représenté en position rétractée. L'amplitude de débattement du porte-roue est généralement de l'ordre de quelques centimètres.

On se réfère maintenant à la figure 7 qui représente une variante du dispositif des figures 1 à 6. Ici, la roue non motrice 20 est de plus faible diamètre que dans le cas précédent, et elle ne vient pas porter directement sur le sol. En conséquence, le porte-roue 34 est disposé dans une position relevée. De plus, le dispositif comprend quatre roues de support 36A à 36D au lieu de trois roues de support.

Sinon, la structure générale du dispositif est analogue à celui de la forme de réalisation précédente.

Il est à noter que dans les deux formes de réalisation précitées, la structure rapprochée des éléments plats de la poutre ainsi que la structure rapprochée des éléments plats du porte-roue, permettent de former chaque roue à partir de deux jantes espacées, dont l'intervalle peut être augmenté, si nécessaire, en particulier lorsqu'il s'agit d'utiliser des chenilles dont les plots ont une largeur plus importante. Ceci présente un intérêt dans le cas où la chenille doit résister à des efforts importants, spécialement pour des véhicules animés par des moteurs de puissance élevée.

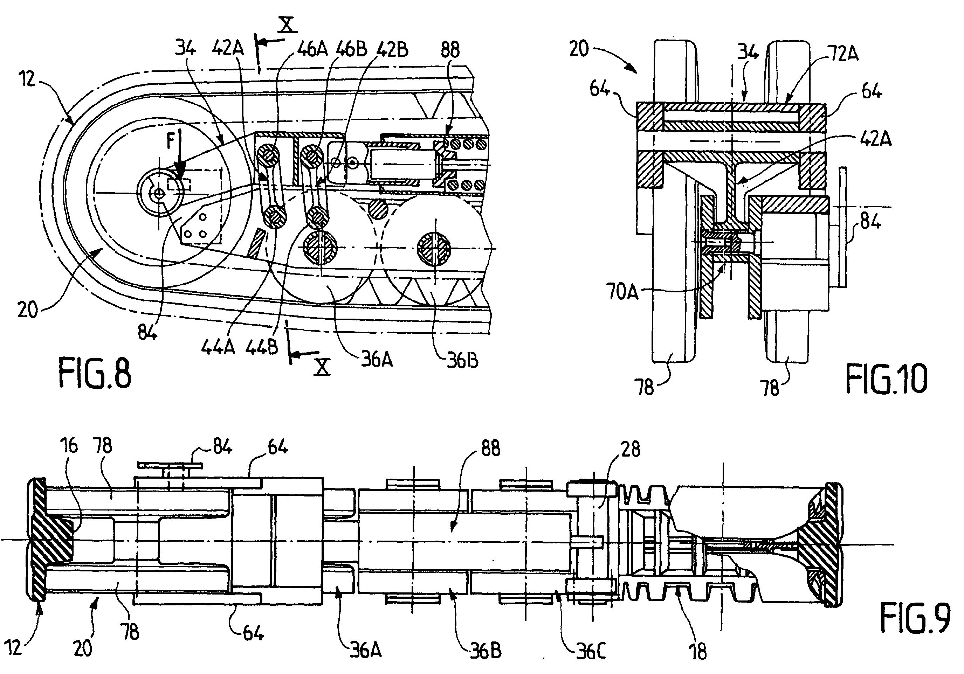

On se réfère maintenant aux figures 8 à 10 qui concernent une seconde forme de réalisation de l'invention qui s'apparente à celle des figures 1 à 6. Les éléments communs avec la forme de réalisation précédente sont désignés par les mêmes références numériques. Dans cette forme de réalisation, la poutre est généralement identique ou similaire à celle de la forme de réalisation précédente. Elle comporte aussi deux éléments plats rapprochés qui supportent trois roues de support. La partie postérieure du dispositif n'a pas été représentée sur la figure 8 car elle est similaire à celle de la figure 1.

Comme on peut le voir sur les figures 9 et 10, la différence principale réside dans le fait que les éléments plats 48 du porte-roue sont beaucoup plus éloignés l'un de l'autre que dans la forme de réalisation précédente. Il en résulte que chacune des bielles, en particulier la bielle 42A (figure 10) doit s'adapter à la différence de largeur entre les éléments plats 48 de la poutre et les éléments plats 64 du porte-roue. Le cylindre 70A a une longueur axiale beaucoup plus faible que le cylindre 72A.

Les éléments plats 64 du porte-roue forment les deux bras d'une fourche entre lesquels est placée la roue non motrice 20. Cette dernière est réalisée ici monobloc, ses deux jantes 78 étant solidaires l'une de l'autre, et non pas indépendantes comme dans la forme de réalisation décrite précédemment.

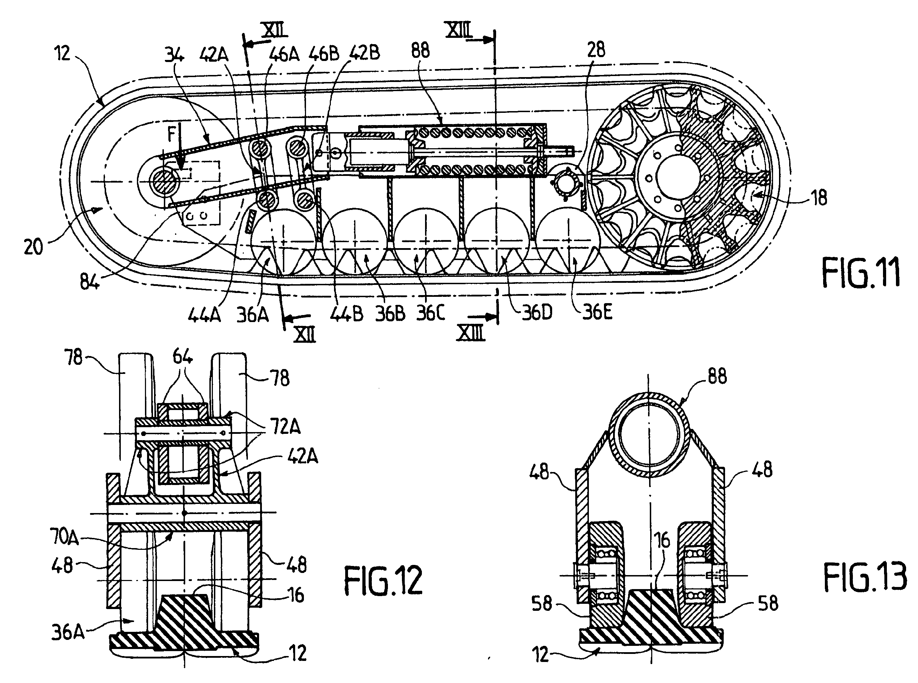

On se réfère maintenant aux figures 11 à 13 qui montrent une troisième forme de réalisation de l'invention. Cette dernière s'apparente à celle de la première forme de réalisation, et les éléments communs sont désignés par les mêmes références numériques.

Dans cette forme de réalisation, les éléments plats 48 de la poutre sont beaucoup plus éloignés, tandis que les éléments plats 64 du porte-roue sont rapprochés, comme dans le cas de la première forme de réalisation.

Le dispositif comprend ici cinq roues de support 36A à 36D, chacune formée de deux jantes indépendantes portées respectivement par les éléments plats 48 de la poutre (figures 12 et 13).

Comme dans le cas de la première forme de réalisation précitée, la roue non motrice 20 comprend deux jantes indépendantes 78 disposées de part et d'autre des éléments plats 64.

Chacune des bielles, en particulier la bielle 42A (figure 12), possède un cylindre 70A de longueur axiale adaptée à l'intervalle compris entre les éléments plats 48.

En revanche, le cylindre 72A est découpé intérieurement pour laisser passage au porte-roue.

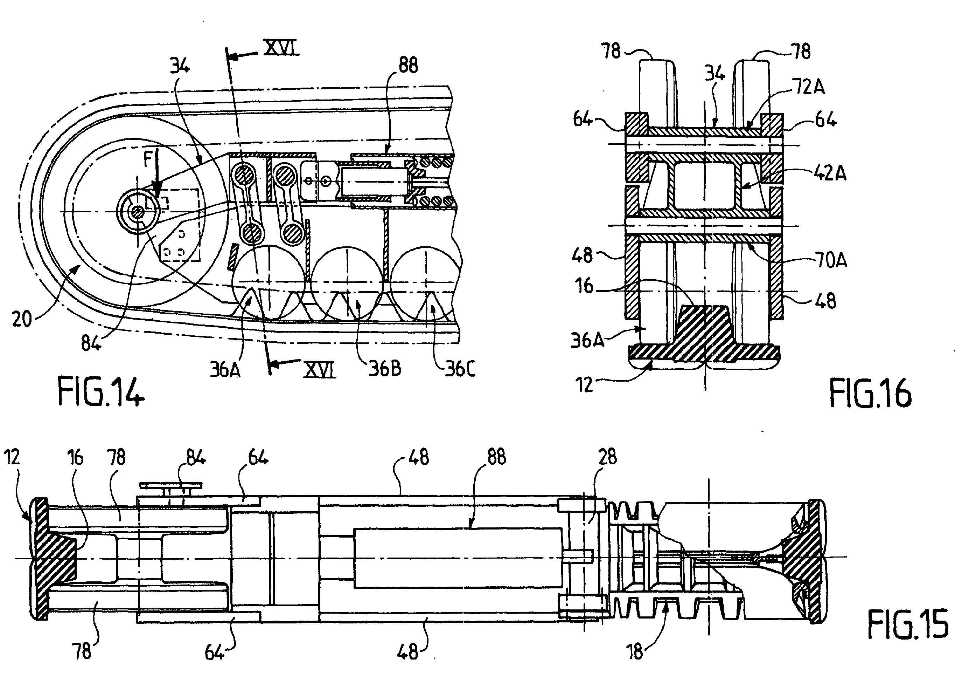

On se réfère maintenant aux figures 14 à 16 pour décrire une quatrième forme de réalisation de l'invention, dans laquelle les éléments communs avec les formes de réalisation précédentes sont désignés par les mêmes références numériques.

Cette forme de réalisation s'apparente à celle des figures 11 à 13, en ce sens que la structure de la poutre et des roues-support est identique. La partie postérieure du dispositif n'est pas représentée sur la figure 14.

En revanche, la structure du porte-roue s'apparente à celle des figures 8 à 10, dans laquelle les éléments 64 sont éloignés et encadrent ainsi la roue non motrice 20, qui est réalisée d'une seule pièce.

Les éléments plats 48 de la poutre et les éléments plats 64 du porte-roue ont des intervalles intérieurs respectifs sensiblement de même valeur. Il en résulte que les cylindres respectifs 70A et 72A de la bielle 42A ont des longueurs axiales adaptées aux intervalles précités. Il en est de même pour la bielle 42B.

Dans les différentes formes de réalisation représentées, le montage articulé du porte-roue par rapport à la poutre offre un guidage parfait au porte-roue et permet en outre de simplifier les fabrications.

Bien entendu, l'invention n'est pas limitée aux formes de réalisation décrites précédemment à titre d'exemple et s'étend à d'autres variantes.

## Revendications

1. Dispositif d'entraînement à chenille, du type comprenant une poutre (26) sensiblement horizontale supportant deux roues d'extrémité (18,20) et des roues de (36A,36B ---) support, ainsi qu'une chenille souple sans fin (12) s'enroulant autour des roues précitées, et dans lequel l'une (20) des roues d'extrémité est portée par un porte-roue (34) monté mobile par rapport à la poutre (26) pour constituer une roue de tension de la chenille,
**caractérisé en ce que** le porte-roue (34) est relié à la poutre (26) par deux bielles (42A, 42B) qui sont articulées chacune à la poutre par une première articulation (44A, 44B) et au porte-roue par une seconde articulation (46A, 46B) en formant une liaison à quadrilatère déformable.

2. Dispositif selon la revendication 1, **caractérisé en ce que** la poutre (26) comprend deux éléments plats rapprochés (48) entre lesquels sont articulées les deux bielles (42A, 42B), **en ce que** le porte-roue (34) comprend deux éléments plats rapprochés (64) entre lesquels sont articulées les deux bielles (42A, 42B), **en ce que** chacune des roues de support (36A, 36B,...) comprend deux jantes coaxiales (56) disposées de part et d'autre de la poutre, et **en ce que** la roue de tension (20) comprend deux jantes coaxiales (78) disposées de part et d'autre du porte-roue.

3. Dispositif selon la revendication 1, **caractérisé en ce que** la poutre (26) comprend deux éléments plats rapprochés (48) entre lesquels sont articulées les deux bielles (42A, 42B), **en ce que** le porte-roue (34) comprend deux éléments plats éloignés (64) entre lesquels sont articulées les deux bielles (42A, 42B), **en ce que** chacune des roues de support (36A, 36B,... ) comprend deux jantes coaxiales (56) disposées de part et d'autre de la poutre, et **en ce que** la roue de tension (20) comprend deux jantes coaxiales (78) disposées entre les éléments plats (64) du porte-roue.

4. Dispositif selon la revendication 1, **caractérisé en ce que** la poutre (26) comprend deux éléments plats éloignés (48) entre lesquels sont articulées les deux bielles (42A, 42B), **en ce que** le porte-roue (34) comprend deux éléments plats rapprochés (64) autour desquels sont articulées les deux bielles (42A, 42B), **en ce que** chacune des roues de support (36A, 36B,...) comprend deux jantes coaxiales (56) disposées entre les éléments plats de la poutre, et **en ce que** la roue de tension (20) comprend deux jantes coaxiales (78) disposées de part et d'autre du porte-roue.

5. Dispositif selon la revendication 1, **caractérisé en ce que** la poutre (26) comprend deux éléments plats éloignés (48) entre lesquels sont articulées les deux bielles (42A, 42B), **en ce que** le porte-roue (34) comprend deux éléments plats éloignés (64) entre lesquels sont articulées les deux bielles (42A, 42B), **en ce que** chacune des roues de support (36A, 36B,..) comprend deux jantes coaxiales (78) disposées entre les éléments plats de la poutre, et **en ce que** la roue de tension (20) comprend deux jantes coaxiales (78) disposées entre les éléments plats du porte-roue.

6. Dispositif selon l'une des revendications 1 à 5,
**caractérisé en ce que** les deux éléments plats (48) de la poutre (26) et/ou les deux éléments plats (64) du porte-roue (34) sont réunis par des entretoises.

7. Dispositif selon l'une des revendications 1 à 5,
**caractérisé en ce que** les deux éléments plats (48) de la poutre (26) et/ou les deux éléments plats (64) du porte-roue sont formés par les ailes d'un profilé en U.

8. Dispositif selon l'une des revendications 1 à 7, **caractérisé en ce que** les premières articulations (44A, 44B) sont disposées en dessous des secondes articulations (46A, 46B), en sorte que le porte-roue (34) se déplace au moins en partie au dessus de la poutre (26).

9. Dispositif selon l'une des revendications 1 à 8,
**caractérisé en ce qu'**il comprend un mécanisme tendeur et amortisseur (88) interposé entre la poutre (26) et le porte-roue (34).

10. Dispositif selon la revendication 9, **caractérisé en ce que** le mécanisme tendeur et amortisseur (88) comprend un cylindre (90) fermé par un fond (92) et fixé sur la poutre (26), un ressort (100) logé dans le cylindre (90) et prenant appui sur son fond (92) et un vérin (96) interposé entre le ressort (100) et le porte-roue (34).

## Claims

1. Caterpillar-type drive device of the type comprising a substantially horizontal bar (26) supporting two end wheels (18, 20) and support wheels (36A, 36B, ...) and a flexible endless caterpillar track rolling around the above-mentioned wheels, and wherein one (20) of the end wheels is carried by a wheel holder (34) mounted to be movable relative to the bar (26) so as to form a tensioning wheel for the caterpillar track,
**characterised in that** the wheel holder (34) is connected to the bar (26) by two connecting rods (42A, 42B) each of which is articulated to the bar by a first joint (44A, 44B) and to the wheel holder (34) by a second joint (46A, 46B), forming a deformable quadrilateral link.

2. Device according to claim 1, **characterised in that** the bar (26) comprises two adjacent flat elements (48) between which the two connecting rods (42A, 42B) are articulated, **in that** the wheel holder (34) comprises two adjacent flat elements (64) between which the two connecting rods (42A, 42B) are articulated, **in that** each of the support wheels (36A, 36B, ...) comprises two coaxial rims (56) disposed on either side of the bar, and **in that** the tensioning wheel (20) comprises two coaxial rims (78) disposed on either side of the wheel holder.

3. Device according to claim 1, **characterised in that** the bar (26) comprises two adjacent flat elements (48) between which the two connecting rods (42A, 42B) are articulated, **in that** the wheel holder (34) comprises two spaced-apart flat elements (64) between which the two connecting rods (42A, 42B) are articulated, **in that** each of the support wheels (36A, 36B, ...) comprises two coaxial rims (56) disposed on either side of the bar, and **in that** the tensioning wheel (20) comprises two coaxial rims (78) disposed between the flat elements (64) of the wheel holder.

4. Device according to claim 1, **characterised in that** the bar (26) comprises two spaced-apart flat elements (48) between which the two connecting rods (42A, 42B) are articulated, **in that** the wheel holder (34) comprises two adjacent flat elements (64) about which the two connecting rods (42A, 42B) are articulated, **in that** each of the support wheels (36A, 36B, ...) comprises two coaxial rims (56) disposed between the flat elements of the bar, and **in that** the tensioning wheel (20) comprises two coaxial rims (78) disposed on either side of the wheel holder.

5. Device according to claim 1, **characterised in that** the bar (26) comprises two spaced-apart flat elements (48) between which the two connecting rods (42A, 42B) are articulated, **in that** the wheel holder (34) comprises two spaced-apart flat elements (64) between which the two connecting rods (42A, 42B) are articulated, **in that** each of the support wheels (36A, 36B, ...) comprises two coaxial rims (78) disposed between the flat elements of the bar, and **in that** the tensioning wheel (20) comprises two coaxial rims (78) disposed between the flat elements of the wheel holder.

6. Device according to one of claims 1 to 5, **characterised in that** the two flat elements (48) of the bar (26) and/or the two flat elements (64) of the wheel holder (34) are joined by spacers.

7. Device according to one of claims 1 to 5, **characterised in that** the two flat elements (48) of the bar (26) and/or the two flat elements (64) of the wheel holder are formed by the arms of a U-shaped section.

8. Device according to one of claims 1 to 7, **characterised in that** the first joints (44A, 44B) are disposed below the second joints (46A, 46B), so that the wheel holder (34) moves at least partly over the bar (26).

9. Device according to one of claims 1 to 8, **characterised in that** it comprises a tensioning and shock-absorbing mechanism (88) interposed between the bar (26) and the wheel holder (34).

10. Device according to claim 9, **characterised in that** the tensioning and shock-absorbing mechanism (88) comprises a cylinder (90) closed off at one end (92) and fixed to the bar (26), a spring (100) housed in the cylinder (90) and bearing on the end (92) thereof and a jack (96) interposed between the spring (100) and the wheel holder (34).

## Patentansprüche

1. Raupenantriebsvorrichtung vom Typ mit einem im Wesentlichen horizontalen Träger (26), der zwei Endräder (18, 20) und Stützräder (36A, 36B, ...) stützt, sowie einer biegsamen Endlosraupe (12), die um die vorgenannten Räder gewickelt ist, und bei der eines (20) der Endräder durch ein Stützrad (34) getragen wird, das beweglich bezüglich des Trägers (26) montiert ist, um ein Spannrad der Raupe zu bilden,
**dadurch gekennzeichnet, dass** das Stützrad (34) mit dem Träger (26) durch zwei Zwischenglieder (42A, 42B) verbunden ist, die jeweils an dem Träger durch ein erstes Gelenk (44A, 44B) und an dem Stützrad durch ein zweites Gelenk (46A, 46B) unter Bildung einer verformbaren Viergelenkverbindung angelenkt sind.

2. Vorrichtung nach Anspruch 1, **dadurch gekennzeichnet, dass** der Träger (26) zwei angenäherte flache Elemente (48) aufweist, zwischen die die beiden Zwischenglieder (42A, 42B) gelenkig angeordnet sind, dass das Stützrad (34) zwei angenäherte flache Elemente (64) aufweist, zwischen die die beiden Zwischenglieder (42A, 42B) angelenkt sind, dass ein jedes der Stützräder (36A, 36B, ...) zwei koaxiale Felgen (56) aufweist, die beiderseits des Trägers angeordnet sind und dass das Spannrad (20) zwei koaxiale Felgen (78) aufweist, die beiderseits des Stützrades angeordnet sind.

3. Vorrichtung nach Anspruch 1, **dadurch gekennzeichnet, dass** der Träger (26) zwei ebene angenäherte Elemente (48) aufweist, zwischen denen die beiden Zwischenglieder (42A, 42B) angelenkt sind, dass das Stützrad (34) zwei flache beabstandete Elemente (64) aufweist, zwischen die die beiden Zwischenglieder (42A, 42B) gelenkig angeordnet sind, dass ein jedes Stützrad (36A, 36B, ...) zwei koaxiale Felgen (56) aufweist, die beiderseits des Trägers angeordnet sind, und dass das Spannrad (20) zwei koaxiale Felgen (78) aufweist, die zwischen den flachen Elementen (64) des Stützrades angeordnet sind.

4. Vorrichtung nach Anspruch 1, **dadurch gekennzeichnet, dass** der Träger (26) zwei flache beabstandete Elemente (48) aufweist, zwischen die die beiden Zwischenglieder (42A, 42B) gelenkig angeordnet sind, dass das Stützrad (34) zwei angenäherte flache Elemente (64) aufweist, um die die beiden Zwischenglieder (42A, 42B) gelenkig angeordnet sind, dass ein jedes der Stützräder (36A, 36B, ...) zwei koaxiale Felgen (56) aufweist, die zwischen den beiden flachen Elementen des Trägers angeordnet sind, und dass das Spannrad (20) zwei koaxiale Felgen (78) aufweist, die beiderseits des Stützrades angeordnet sind.

5. Vorrichtung nach Anspruch 1, **dadurch gekennzeichnet, dass** der Träger (26) zwei flache beabstandete Elemente (48) aufweist, zwischen die die beiden Zwischenglieder (42A, 42B) gelenkig angeordnet sind, dass das Stützrad (34) zwei flache beabstandete Elemente (64) aufweist, zwischen die die beiden Zwischenglieder (42A, 42B) gelenkig angeordnet sind, dass ein jedes der Stützräder (36A, 36B, ...) zwei koaxiale Felgen (78) aufweist, die zwischen den flachen Elementen des Trägers angeordnet sind, und dass das Spannrad (20) zwei koaxiale Felgen (78) aufweist, die zwischen den flachen Elementen des Stützrades angeordnet sind.

6. Vorrichtung nach einem der Ansprüche 1 bis 5, **dadurch gekennzeichnet, dass** die beiden flachen Elemente (48) des Trägers (26) und/oder die beiden flachen Elemente (64) des Stützrades (34) durch Zwischenhülsen verbunden sind.

7. Vorrichtung nach einem der Ansprüche 1 bis 5, **dadurch gekennzeichnet, dass** die beiden flachen Elemente (48) des Trägers (26) und/oder die beiden flachen Elemente (64) des Stützrades aus den Flügeln eines U-Profils gebildet sind.

8. Vorrichtung nach einem der Ansprüche 1 bis 7, **dadurch gekennzeichnet, dass** die ersten Gelenke (44A, 44B) unterhalb der zweiten Gelenke (46A, 46B) angeordnet sind, derart, dass sich das Stützrad (34) wenigstens teilweise oberhalb des Trägers (26) bewegt.

9. Vorrichtung nach einem der Ansprüche 1 bis 8, **dadurch gekennzeichnet, dass** sie einen Spann- und Dämpfungsmechanismus (88) aufweist, der zwischen den Träger (26) und dem Stützrad (34) gesetzt ist.

10. Vorrichtung nach Anspruch 9, **dadurch gekennzeichnet, dass** der Spann- und Dämpfungsmechanismus (88) einen Zylinder (90), der durch einen Boden (92) geschlossen ist, und an dem Träger (26) befestigt ist, eine Feder (100), die in dem Zylinder (90) angeordnet ist, und sich auf seinen Boden (42) abstützt, und einen Stelltrieb (96) aufweist, der zwischen der Feder (100) und dem Stützrad (34) gesetzt ist.
